# EUROPEAN PATENT APPLICATION

(11) **EP 2 993 574 A2**
(43) Date of publication of application: **09.03.2016**
(21) Application number: 15189849.1
(22) Date of filing: 03.01.2012
(51) Int. Cl.: G06F 3/0488, G06F 3/0481, G06F 17/30

(54) **FACILITATING THE USE OF SELECTABLE ELEMENTS ON TOUCH SCREENS**

(62) Divisional of application: 12864296.4
(71) Applicant: Intel Corporation, Santa Clara, CA 95054 (US)
(72) Inventor: ZHANG, Xing, 610069 ChengDu (CN); HU, Ningxin, 200241 Minghang District (CN); ZHAO, Xiaoqing, 200241 Minghang District (CN)
(74) Representative: Hufton, David Alan

(57) **Abstract**

When the user touches a touch selectable element, the appearance of the computer recognized selected element may be changed so that the user can confirm that the element is, in fact, the element the user intended to select. If it is not, in some embodiments, the user can slide the user's finger to the correct element and, again, that element may be modified in a way to indicate to the user which element has now been selected. When the user removes the user's finger from the touch selectable element, in some embodiments, the element is then selected. Also, the user, in some embodiments, can touch blank areas of the display screen to reveal which elements on the display screen are touch selectable elements.

## Description

### Background

This relates generally to touch screens.

Touch screens allow the user to provide inputs to a computer system by merely touching the screen. With conventional touch screens and, particularly, those associated with mobile devices, the screen may be relatively small. This means that the display of text or other symbols on the screen may be relatively small compared to the size of the user's finger. Thus, the user may touch a symbol on a screen in order to provide an input, but the user's finger may completely overlie the item being touched. As a result, the user may actually select a different symbol, also under the user's finger, than the one the user intended to select. This results in consumer confusion and dissatisfaction with small touch screens.

Another problem with touch screens is that clickable links are not generally indicated by any kind of graphical symbol. Thus, the user must touch a link in order to determine if, in fact, it is a clickable link.

### Brief Description of the Drawings

Figure 1 is a schematic depiction of one embodiment of the present invention;
Figure 2 is an enlarged depiction of a portion of a touch screen display in accordance with one embodiment;
Figure 3 is an enlarged depiction of a portion of a touch screen display corresponding to that shown in Figure 2 after the user has selected a touch activateable link on the display screen using the user's finger;
Figure 4 is an enlarged depiction of a portion of a touch screen display in accordance with one embodiment of the present invention;
Figure 5 is an enlarged depiction of a touch screen display portion shown in Figure 4 after the user has touched a region of the screen proximate to the region shown in Figure 4 in accordance with one embodiment of the present invention;
Figure 6 is a flow chart for one embodiment of the present invention; and
Figure 7 is a flow chart for another embodiment of the present invention.

### Detailed Description

In accordance with some embodiments, the appearance of a touch selectable element on a touch screen may be changed when the user positions the user's finger over the element. For example, the element may be enlarged so that the user knows which element the computer understands has been selected. This may reduce the number of inadvertent selections in some embodiments. In some embodiments, if the indicated element is not the one the user intended to select, the user can simply slide the user's finger over to center over the desired element. Then, when the user lifts the user's finger from the screen, in one embodiment, the underlying element is then actually selected.

In some embodiments, finger touch commands can be understood to be a request to indicate which elements of a plurality of elements displayed on the screen are actually hot clickable or hot selectable elements. For example, when the user presses a particular area on the screen, all the clickable elements may have their appearance modified in one way or another.

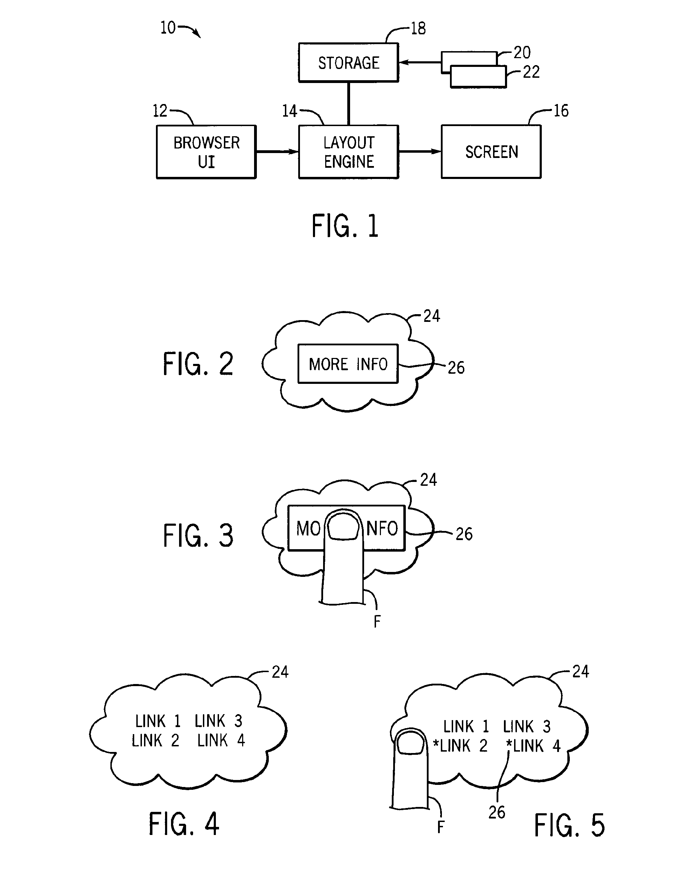

Referring to Figure 1, a processor-based system 10 may be any device that includes a touch screen display. This may include non-portable wired devices, such as desktop computers, as well as portable devices, including tablets, laptop computers, mobile Internet devices, cellular telephones, Smart phones, and entertainment devices, to give a few examples.

The processor-based system 10 may include a processor implementing a layout engine 14. The layout engine 14 may receive inputs from a browser user interface 12. The layout engine may render screen outputs to a touch screen 16. The layout engine 14 may be coupled to a storage device 18, which may store software implemented sequences 20 and 22, in some embodiments of the present invention.

Referring to Figure 2, in accordance with one embodiment of the present invention, the touch screen 16 may include a display that includes the portion 24. The portion 24 may include a touch selectable element 26, such as a button, icon, or text. As used herein, a touch selectable element is any textural, numeric, or graphical display that may be touched with a finger, a cursor, or a stylus, to perform a specified function. When the user touches the element 26, the user's finger may be large enough, relative to the text size, that the user cannot see the element under the user's finger and may thereby inadvertently operate other elements that are nearby.

To overcome this problem, in some embodiments, as shown in Figure 3, when the user's finger F touches the element 26, in Figure 2, the size of the element may be increased, as indicated in Figure 3, so that the user can be sure that the user is clicking the right element. If the user realizes the user is actually on the wrong element, the user can simply slide the user's finger to hit the right element, which will then be enlarged as well. Once the user's finger is on the intended element, when the user lifts the user's finger, in one embodiment, the element is selected and activated. Other changes in the depiction of the element, to indicate what element was selected, may also be used in addition to, or in place of, increasing its size. Examples include highlighting the element, moving the element so the material covered by the user's finger is displayed above the user's finger and is, therefore, readable, or providing an arrow indicating the element that is selected on the display screen. Actions other than lifting the finger may be recognized, including pressing a select button, touching a screen area associated with a select input, a double tap on the highlighted link or any other action, including gestures that indicate element selections.

In accordance with another embodiment of the present invention, a portion 24 of the display screen 16 may include a display of four elements, labeled links 1-4, in Figure 4. When the user positions the user's finger F on the touch screen 16 adjacent the links 1-4, as shown in Figure 5, the clickable links of a group associated with the position touch may be displayed. For example, when the user positions his finger in a region to the left of a row of clickable links, all the links in that row (i.e. link 2 and link 4) may be activated to indicate that they are clickable.

Thus, a star or asterisk 26 may appear through the links, the links may be highlighted or may be enlarged to indicate that the text adjacent the user's finger is actually a clickable link that can be selected by the user, as described above. In this way, clickable links may be revealed on touch screens to allow user identification of what is and is not a clickable link. In some embodiments, a region on the screen may be provided so that when the user touches that region, all the clickable links on the display are automatically indicated.

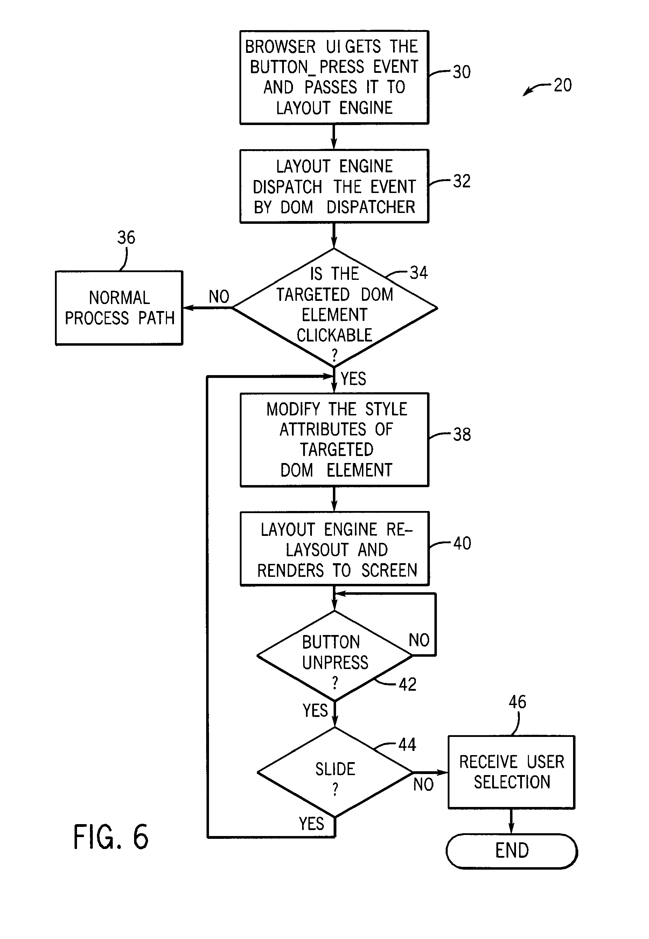

Referring to Figure 6, in accordance with one embodiment of the present invention, a sequence 20 may be implemented in hardware, software, or firmware. In software and firmware embodiments, a sequence of computer readable instructions may be stored on a non-transitory computer readable medium, such as a magnetic, optical, or semiconductor memory. For example, the sequence 20 in software and firmware embodiments may be stored on the storage 18, shown in Figure 1, in one embodiment.

Referring to Figure 6, the sequence begins, in one embodiment, when the browser user interface 12 (Figure 1) gets a button press event and passes it to the layout engine 14 (Figure 1), as indicated in block 30. Then the layout engine dispatches the event to the document object model (DOM) dispatcher, as indicated in block 32. A check at diamond 34 determines whether the targeted DOM element is clickable. If not, a normal process path is followed, as indicated in block 36.

Otherwise, the style attributes of the targeted DOM element may be modified, as indicated in block 38. This is also illustrated in Figure 3, in accordance with one embodiment. The layout engine lays out and renders the modified attributes to the screen, as indicated in block 40.

Then, a check at diamond 42 determines whether there has been a button unpress event, for example, by lifting the user's finger or sliding the user's finger. If the user has slid the user's finger, as determined in diamond 44, the flow iterates back to block 38, recognizing that the user has changed his or her mind about selecting the element that was previously selected, perhaps because the user had inadvertently placed his or her finger over the wrong element and the user recognized the error when the element was enlarged, in accordance with one embodiment of the present invention.

Otherwise, if a slide is not detected, then a button unpress command can be understood. In other words, in one embodiment of the present invention, the touching simply indicates the user's preliminary selection and the lifting of the user's finger indicates acceptance of that selection after enlargement of the selected element, in some embodiments of the present invention. As a result, lifting the user's finger in a way other than sliding the finger may be recognized as receiving a user's selection, indicated in block 46. Other gestural commands could also be used.

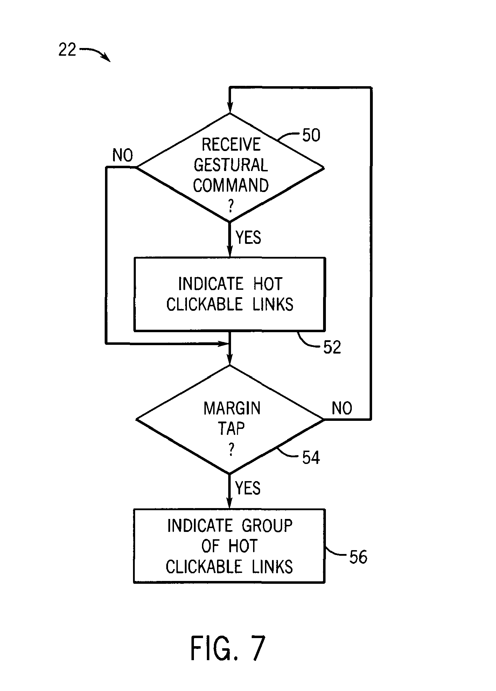

Moving now to Figure 7, a sequence 22 may indicated to the user where clickable elements are on a touch screen. The sequence 22 may be implemented in software, hardware, or firmware. In software and firmware based embodiments, the sequence may be implemented by computer readable instructions stored on a non-transitory computer readable medium, such as a semiconductor, optical, or magnetic storage. In one embodiment, the sequence 22 may be stored on the storage 18 in Figure 1.

The sequence 22 begins by receiving a gestural command, as indicated in diamond 50. The various gestural commands may be used. For example, a sweeping hard gesture across the entire display may be understood as a request to indicate which elements are clickable. Likewise, touching a blank region on the display may be understood to be a request to indicate which regions are hot clickable. If a gestural command is received, then the hot clickable links may be indicated by an appropriate visual indication on the display screen, including highlighting or magnifying the clickable elements or adding icons in association with those clickable elements, as indicated in block 52.

If no gestural command was received or the hot clickable links have already been indicated, a check at diamond 54 determines whether there has been a margin tap. In one embodiment, a gestural command, such as a margin tap adjacent a series of clickable elements, may be understood to select a group of adjacent clickable elements. The group may be, in some embodiments, a row of clickable elements adjacent the blank region tapped or a column of clickable elements, to give two examples, adjacent the region tapped. In such case, the entire group of clickable links may be indicated in the same fashion described above in connection with block 52 or as indicated in block 56.

References throughout this specification to "one embodiment" or "an embodiment" mean that a particular feature, structure, or characteristic described in connection with the embodiment is included in at least one implementation encompassed within the present invention. Thus, appearances of the phrase "one embodiment" or "in an embodiment" are not necessarily referring to the same embodiment. Furthermore, the particular features, structures, or characteristics may be instituted in other suitable forms other than the particular embodiment illustrated and all such forms may be encompassed within the claims of the present application.

While the present invention has been described with respect to a limited number of embodiments, those skilled in the art will appreciate numerous modifications and variations therefrom. It is intended that the appended claims cover all such modifications and variations as fall within the true spirit and scope of this present invention.

## Claims

1. A method comprising:
enabling touch activation of an indication of which elements on a touch screen have selectable links;
automatically altering the appearance of a touch selectable element on a touch screen in response to touch selection;
providing the user with an indication of what element is selected; and
in response to a separate action after touch selection, activating a function associated with the touch selectable element.

2. The method of claim 1 including indicating in response to a touch activation which elements displayed on the touch screen are touch selectable links.

3. The method of claim 2 including providing the indication of selectable links in response to selection of a blank area of the touch screen.

4. The method of claim 1 including indicating in response to a gesture over the touch screen which elements displayed on the touch screen are touch selectable links.

5. The method of claim 1 including enlarging the appearance of a touch selectable element in response to touch selection.

6. A non-transitory computer readable medium storing instructions executed by a computer to:
in response to contact on a touch screen, provide an indication of what touch selectable element is depicted where the screen was contacted;
in response to a change in contact after contacting the touch screen, activate a function associated with the element; and
enable touch activation of an indication of which elements on a touch screen have selectable links.

7. The medium of claim 6 further storing instructions to provide the indication of selectable links in response to selection of a blank area on the touch screen.

8. The medium of claim 6 further storing instructions to activate the function associated with the element in response to the user removing contact from the touch screen.

9. The medium of claim 6 further storing instructions to in response to a gesture over the touch screen indicate which elements displayed on the touch screen are touch selectable links.

10. A processor-based device comprising:
a processor; and
a touch panel coupled to said processor, said processor to enabling touch activation of an indication of which elements on a touch screen have selectable links, alter the appearance of a touch selectable element in response to initial touch selection and in response to a subsequent user action, select a function associated with the touch selectable element.

11. The device of claim 10, said processor to indicate in response to a touch activation which elements displayed on the touch screen are touch selectable links.

12. The device of claim 11, said processor to provide the indication of selectable links in response to selection of a blank area on the touch screen.

13. The device of claim 10, said processor to in response to a gesture over the touch screen indicate which elements displayed on the touch screen are touch selectable links.

14. The device of claim 10, said processor to activate said function in response to the user lifting the user's finger from a touch selectable element.

15. The device of claim 10, said processor to enlarge a touch selectable element when initially touched.
